# FASCICULE DE BREVET EUROPEEN

(11) **EP 3 244 167 B1**
(45) Date de publication et mention de la délivrance du brevet: **12.09.2018**
(21) Numéro de dépôt: 17169213.0
(22) Date de dépôt: 03.05.2017
(51) Int. Cl.: G01D 5/14, G01D 5/244, G01P 3/487, H02K 11/215

(54) **COMPOSANT MAGNETIQUE POUR CAPTEUR A EFFET HALL, ENSEMBLE ELECTRIQUE ET COMPRESSEUR DE SURALIMENTATION ELECTRIQUE COMPRENANT UN TEL COMPOSANT MAGNETIQUE**
MAGNETKOMPONENTE FÜR HALL-EFFEKT-SENSOR, ELEKTRISCHE EINHEIT UND ELEKTRISCHER AUFLADEKOMPRESSOR, DER EINE SOLCHE MAGNETKOMPONENTE UMFASST
MAGNETIC COMPONENT FOR HALL-EFFECT SENSOR, ELECTRICAL ASSEMBLY AND ELECTRIC SUPERCHARGER COMPRISING SUCH A MAGNETIC COMPONENT

(30) Priorité: 04.05.2016 FR 1654035
(43) Date de publication de la demande: 15.11.2017
(73) Titulaire: Valeo Systemes de Controle Moteur, 95800 Cergy Saint Christophe (FR)
(72) Inventeur: GUERBAOUI, Samir, 95800 CERGY SAINT CHRISTOPHE (FR); MERAND, Denis, 95800 CERGY SAINT CHRISTOPHE (FR)
(74) Mandataire: Cardon, Nicolas

(56) Documents cités:
- US-B2- 8 283 914

## Description

La présente invention concerne un composant magnétique pour capteur à effet hall, un ensemble électrique comprenant un composant selon l'invention, et un compresseur de suralimentation électrique comportant un ensemble électrique selon l'invention.

Dans le cadre de l'invention, un compresseur de suralimentation électrique est un dispositif, utilisé pour suralimenter un moteur thermique, et fonctionnant avec une machine électrique. Plus précisément, le compresseur comporte une roue de compression entrainée par la machine électrique.

Typiquement, un compresseur de suralimentation électrique est placé sur la ligne d'admission d'air d'un moteur à combustion interne, notamment d'un véhicule, en complément d'un turbocompresseur. Le compresseur de suralimentation électrique joue le même rôle que le turbocompresseur, à savoir augmenter la pression d'admission des gaz frais dans le moteur à combustion interne, mais est utilisé notamment lors des phases transitoires pour palier aux problèmes de temps de réponse du turbocompresseur.

Un capteur à effet hall en collaboration avec un composant magnétique formant cible magnétique permet de détecter une rotation de l'arbre de la machine électrique. Par exemple, la demande de brevet française FR3025666 décrit un compresseur de suralimentation électrique comprenant un capteur à effet hall. La cible magnétique est formée par un aimant dans lequel des zones de polarisation positive et négative sont formées. Une alternance des zones de polarisation positive et négative permet une détection par le capteur à effet hall. Ces zones de polarisation sont formées dans un même matériau par une opération de polarisation dans laquelle on soumet le matériau à une forte polarisation positive ou négative. Lors de cette opération il est nécessaire de bien délimiter les zones du matériau destinées à être de polarisation positive et négative. En outre, dans une démarche de réduction du poids de l'ensemble dans lequel est intégrée la cible magnétique, par exemple dans un compresseur de suralimentation électrique, il est recherché une diminution du poids des composants, notamment de la cible magnétique.

US8283914 décrit un composant magnétique connu configuré pour être monté en relation avec une pièce tournante, comprenant un corps amagnétique ayant un axe destiné à s'aligner avec l'axe de rotation de la pièce, dans lequel quatre premiers aimants sont logés et forment une alternance d'aimants positif et négatif, et dans lequel corps amagnétique sont aussi logés quatre deuxièmes aimants positionnés dans un intervalle angulaire respectif entre deux premiers aimants successifs.

Il est donc recherché un composant magnétique formant cible magnétique pour capteur à effet hall palliant les inconvénients de l'art antérieur.

A cet effet, il est proposé un composant magnétique selon la revendication 1, configuré pour être monté en relation avec une pièce tournante de manière à permettre une détection de la rotation de ladite pièce par un capteur à effet hall, ledit composant magnétique comprenant :
- un corps amagnétique ayant un axe destiné à s'aligner avec l'axe de rotation de la pièce,
- quatre premiers aimants logés dans ledit corps et formant une alternance d'aimants positif et négatif, lesdits aimants étant des éléments indépendants maintenus ensemble par ledit corps et positionnés successivement à des angles de 90° autour de l'axe du corps,
- quatre deuxièmes aimants logés dans ledit corps et positionnés dans un intervalle angulaire respectif entre deux premiers aimants successifs
le rapport entre l'induction rémanente d'un premier aimant et l'induction rémanente d'un deuxième aimant étant comprise entre 0,3 et 0,5.

Le composant magnétique forme une cible magnétique pour le capteur à effet hall. Les zones de polarisation positive et négative du composant magnétique selon l'invention sont définies par les premiers aimants indépendants reçus dans le corps du composant magnétique. On évite ainsi la définition de zones de polarisation différentes dans un même matériau, étape qui peut être lourde à réaliser. Avec les quatre premiers aimants régulièrement répartis autour de l'axe du corps on obtient une cible magnétique qui permet une détection par le capteur par effet hall tout en limitant la quantité d'aimant dans le composant magnétique, ce qui allège le composant magnétique. Les caractéristiques du composant magnétique permettent donc un gain en poids par rapport à l'art antérieur. Les deuxièmes aimants permettent d'améliorer la détection de position en permettant une pente forte sur les fronts montants ou descendants du champ magnétique variable reçu par le capteur à effet hall. La pente obtenue est par exemple supérieure à 4mT/°(milliTesla/degré).

Selon un mode de réalisation, le rapport entre la dimension des deuxièmes aimants suivant l'axe du corps et la dimension des premiers aimants suivant l'axe du corps est supérieure ou égale à 1/3 et inférieur ou égal à 2.

Selon un mode de réalisation, le rapport entre la dimension des deuxièmes aimants suivant une direction, transverse à l'axe du corps, et la dimension des premiers aimants suivant cette direction est supérieur ou égal à 0,2 et inférieur ou égal à 0,5.

Selon un mode de réalisation, les premiers aimants ont une induction rémanente comprise entre 0,2 et 0,6 T ; et les deuxièmes aimants ont une induction rémanente comprise entre 0,6 et 1,2 T.

Selon un mode de réalisation, le composant magnétique comprend seulement quatre premiers aimants et quatre deuxièmes aimants de manière à permettre une détection de la rotation de ladite pièce par un capteur à effet hall.

Selon un mode de réalisation, les aimants sont séparés entre eux par un angle radial. Ainsi, le poids du composant magnétique peut être allégé car il n'est pas intégralement formé par les aimants. En fonction du matériau choisi pour le corps, le composant magnétique peut donc être plus léger et moins couteux que dans l'art antérieur.

Selon un mode de réalisation, les aimants sont en forme de palet.

Selon un mode de réalisation, le composant est configuré pour être monté sur un arbre tournant de manière à permettre une détection d'une rotation de l'arbre par un capteur à effet hall.

Selon un mode de réalisation, le corps a une ouverture centrale autour de son axe, l'ouverture centrale étant configurée pour recevoir l'arbre tournant.

L'invention concerne aussi un ensemble électrique comprenant :
- une machine électrique tournante ayant un arbre de rotation ;
- au moins un composant magnétique selon l'invention monté sur l'arbre de rotation ;
- au moins un capteur à effet hall configuré pour détecter une rotation de l'arbre de rotation à partir d'un champ magnétique émis par le composant magnétique.

Selon un mode de réalisation, le composant magnétique est monté à une première position axiale le long de l'axe de rotation de la machine et le capteur à effet hall est monté à une deuxième position axiale le long de l'axe de rotation différente de la première position axiale, de sorte à venir en vis-à-vis d'au moins une portion du composant magnétique pour une détection de rotation de l'arbre de rotation.

Selon un mode de réalisation, la distance entre le composant magnétique et le capteur à effet hall est comprise entre 2,1 et 3,3 mm.

L'invention concerne aussi un compresseur de suralimentation électrique, notamment pour véhicule automobile, comprenant :
- un ensemble électrique selon l'invention ;
- une roue de compression de gaz configurée pour être entrainée par la machine électrique de l'ensemble électrique ;
- une électronique comprenant ledit capteur à effet hall.

L'invention sera mieux comprise en faisant référence aux dessins, dans lesquels :
- la figure 1 illustre une vue en perspective du dessus d'un ensemble comprenant un premier composant magnétique ;
- la figure 2 illustre une vue en perspective du dessous de l'ensemble illustré en figure 1 ;
- la figure 3 illustre une vue en perspective du composant magnétique représenté en figure 1 lorsqu'il est monté autour d'un arbre tournant ;
- la figure 4 illustre une vue de coupe d'un compresseur de suralimentation électrique selon un mode de réalisation de l'invention ;
- la figure 5 illustre une vue en perspective d'un second composant magnétique lorsqu'il est monté autour d'un arbre tournant ;
- la figure 6 représente la variation de l'induction vue par le capteur à effet hall monté en association avec le premier composant magnétique ;
- la figure 7 représente la variation de l'induction vue par le capteur à effet hall monté en association avec le deuxième composant magnétique.

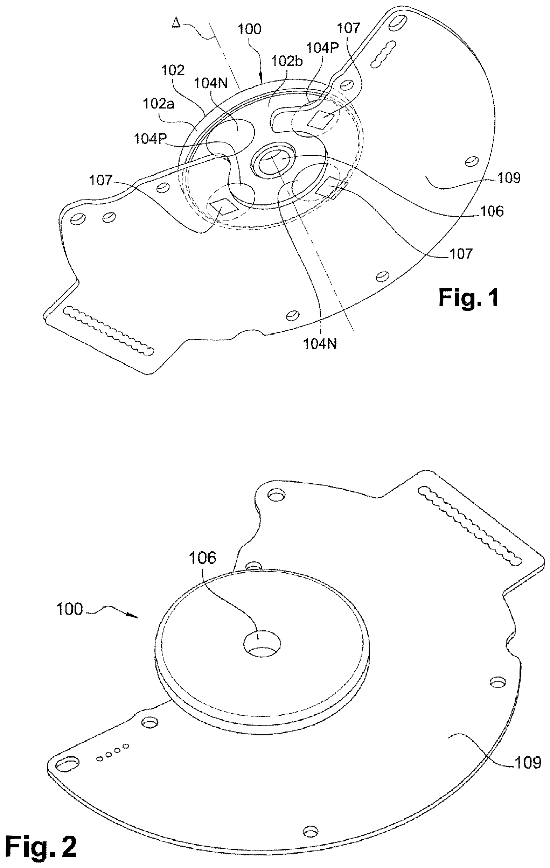

Les figures 1 à 3 illustrent un exemple de composant magnétique 100 formant une cible magnétique pour un capteur à effet hall 107.

Le composant magnétique 100 comprend un corps 102 amagnétique. Par exemple, le corps 102 a une perméabilité magnétique relative inférieure à 50 unités afin de ne pas perturber le signal capteur. En particulier, le corps 102 tient les contraintes mécaniques liées à la rotation du composant magnétique 100. Le corps 102 présente un axe Δ. En particulier, le corps 102 présente une symétrie en rotation autour de l'axe Δ. Le corps 102 peut avoir une forme générale de disque.

Le corps 102 peut être en plusieurs parties. Notamment, le corps 102 comprend une base 102a formant une cavité recevant un matériau 102b logeant les aimants 104P, 104N du composant magnétique 102. Ainsi, le matériau 102 logeant les aimants 104P, 104N peut être en un matériau plus léger et/ou moins rigide que la base 102a, ce qui permet de diminuer le poids du composant magnétique 100. En particulier, la base 102a peut être en aluminium. Le matériau 102b logeant les aimants 104P, 104N peut être en plastique. En particulier, la base 102a a une forme de disque comprenant une paroi continue sur sa périphérie de manière à former une cavité recevant le matériau 102b. La base 102a peut comprendre aussi une ouverture centrale 106 pour le passage d'un arbre tournant comme cela sera décrit par la suite. Une paroi délimite l'ouverture centrale 106 pour former la cavité recevant le matériau 102b logeant les aimants 104P, 104N. Cependant le corps 102 pourrait être en une seule partie. Le corps est alors intégralement formé par le matériau logeant les aimants 104P, 104N, avec notamment l'ouverture centrale 106 pour le passage de l'arbre tournant.

Le composant magnétique 100 comprend quatre aimants 104P, 104N logés dans le corps 102. Les aimants 104P, 104N sont indépendants et sont maintenus ensemble par le corps 102. Ainsi, le composant magnétique 100 n'est pas intégralement formé par un aimant. Ce qui permet de choisir un matériau léger pour maintenir ensemble les aimants. Un aimant positif 104P est positionné en alternance avec un aimant négatif 104N. Le composant magnétique 100 comprend donc deux aimants positifs 104P et deux aimants négatifs 104N. Par l'expression « aimant positif » on entend un aimant ayant une polarisation positive. Par l'expression « aimant négatif » on entend un aimant ayant une polarisation négative. Les aimants 104P, 104N sont positionnés successivement autour de l'axe Δ du corps 102 à des positions séparées d'un angle de 90°. Un tel agencement des aimants 104P, 104N permet une détection efficace par le capteur à effet hall 107. Les aimants 104P, 104N sont notamment en ferrite. Notamment, les aimants 104P, 104N ont des formes identiques. Ainsi, en évitant une conformation spécifique à chaque aimant, on limite le cout de fabrication du composant magnétique 100. En particulier, les aimants 104P, 104N peuvent être en forme de palet. Plus précisément, les aimants 104P, 104N peuvent avoir une forme cylindrique ou prismatique. Une forme cylindrique présente une meilleure résistance aux champs démagnétisants Notamment, les aimants 104P, 104N ont une hauteur comprise entre 2 et 8 mm. Notamment, les aimants 104P, 104N ont une dimension latérale compris entre 2 et 8 mm. Par exemple, les aimants 104P, 104N ont une forme de cylindre et une dimension latérale, c'est-à-dire un diamètre compris entre 2 et 8 mm.

Les aimants 104P, 104N sont logés dans le corps 102, par exemple par surmoulage. Les aimants 104P, 104N peuvent être également montés en force dans le corps 102.

Le composant magnétique 100 permet une détection d'une pièce tournante par un capteur à effet hall. A cet effet, le composant magnétique 100 peut être monté en association avec un capteur à effet hall 107 qui détecte une rotation du composant magnétique 100 qui est liè à la pièce tournante.

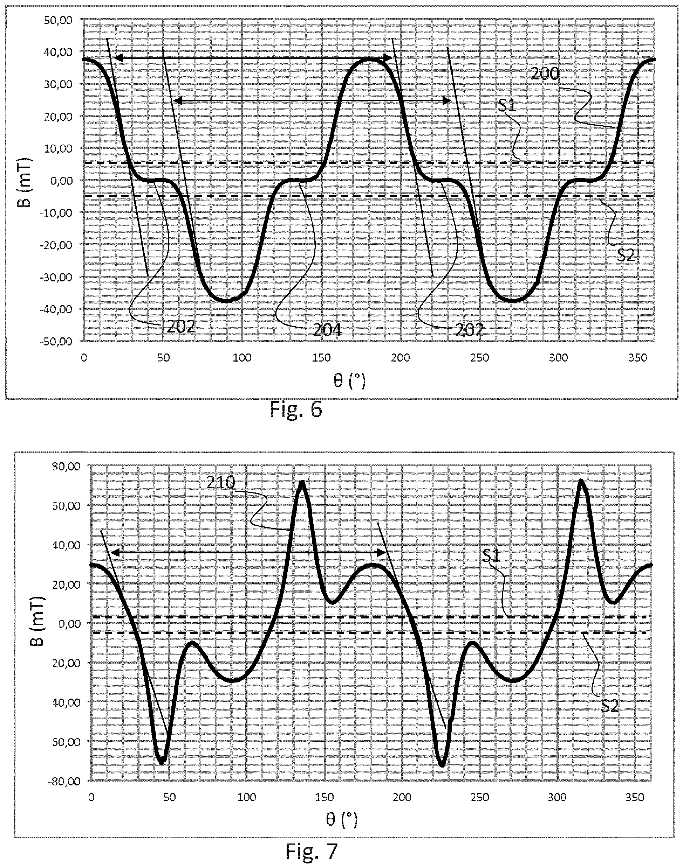

La figure 6 illustre la variation 200 du champ magnétique B perçu par le capteur à effet hall 107, exprimé en millitesla, en fonction d'une position angulaire θ du composant magnétique 100, exprimée en degrés, lors d'une rotation du composant magnétique 100, en négligeant les perturbations issues de l'environnement. L'alternance d'aimant positif et négatif en vis-à-vis du capteur à effet hall 107 crée des fronts montants et descendants. Le comptage du nombre de tours du composant magnétique 100 s'effectue en détectant le franchissement de seuils S1, S2 matérialisés par des traits en pointillés. Les seuils S1, S2 peuvent être respectivement égaux à +0,5 mT et -0,5mT.

Sous l'effet de perturbations magnétiques liées à l'environnement, un bruit peut se superposer à la courbe 200. Le bruit lié aux perturbations magnétiques peut induire des irrégularités sur la courbe 200. Le bruit peut être limité par un blindage magnétique. Cependant, il est préférable de limiter également la sensibilité de la courbe 200 à ce bruit. En particulier, on observe que les fronts descendants ou montants n'ont pas une allure régulière. Les fronts descendants et montants comprennent respectivement une partie 202, 204 située entre les seuils S1, S2 dans laquelle la pente est sensiblement nulle. Or la présence d'un bruit sur ces parties 202, 204 peut induire un franchissement intempestif des seuils S1, S2, ce qui peut fausser le comptage de tours du composant magnétique 100. Une telle incertitude n'est généralement pas gênante pour des applications où la vitesse de rotation du composant magnétique 100 est inférieure à 10000 tours/minute environ. Cependant, pour des applications à haute vitesse de rotation, par exemple supérieure à 10000 tours/minute, ou à 60000, voire à 70000 tours/minute, l'incertitude peut devenir problématique.

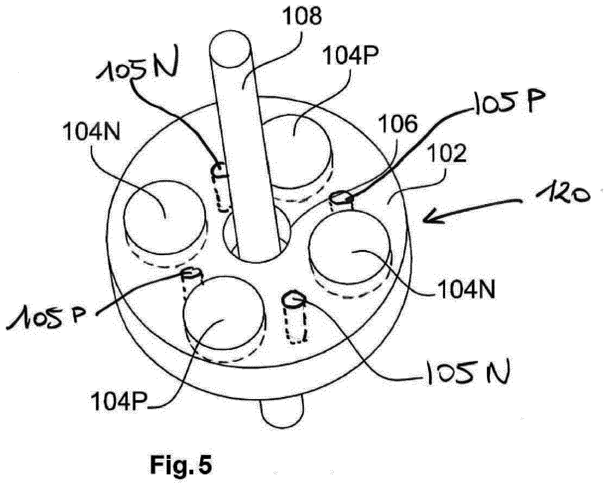

La figure 5 illustre un exemple de composant magnétique 120 selon un mode de réalisation de l'invention. Le composant magnétique 120 est identique au composant magnétique 100 décrit précédemment, si ce n'est qu'il comprend en outre des deuxièmes aimants 105P, 105N logés dans le corps 102. Les deuxièmes aimants 105P, 105N peuvent être logés dans le corps 102 de manière similaire aux premiers aimants 104P, 104N. Chaque deuxième aimant 105P, 105N est positionné dans un intervalle angulaire respectif entre deux premiers aimants 104P, 104N successifs. Autrement dit, entre deux premiers aimants 104P, 104N successifs se trouve un deuxième aimant 105P, 105N. Les deuxièmes aimants 105P, 105N sont tels que le rapport entre l'induction rémanente d'un premier aimant 104P, 104N et l'induction rémanente d'un deuxième aimant 105P, 105N est comprise entre 0,3 et 0,5. L'induction rémanente est un paramètre magnétique d'un matériau qui correspond à l'induction qui subsiste dans un échantillon du matériau après avoir polarisé à saturation l'échantillon, puis fait décroître la polarisation jusqu'à zéro. Le composant magnétique 120 illustré en figure 5 peut être utilisé dans les mêmes conditions que le composant magnétique 100, notamment dans l'ensemble illustré en figures 1 et 2.

La figure 7 illustre la variation 210 du champ magnétique perçu par le capteur à effet hall 107 en fonction d'une position angulaire du composant magnétique 120 lors d'une rotation du composant magnétique 120, en négligeant les perturbations issues de l'environnement. On observe que, entre les seuils S1, S2, les fronts montants et descendants ne comprennent plus de parties 202, 204 dans lesquelles la pente est sensiblement nulle. Sur la courbe 210, grâce au rapport entre les inductances rémanentes, les parties entre les seuils S1, S2 sont monotonement croissantes ou décroissantes. On observe que l'introduction des deuxièmes aimants 105P, 105N entraine des irrégularités sur la courbe 210, mais ces irrégularités se trouvent hors des seuils de détection S1, S2, et n'ont donc pas d'influence sur la détection des tours du composant magnétique 120 par le capteur à effet hall 107.

Notamment, les deuxièmes aimants 105P, 105N comprennent des aimants positifs 105P et négatifs 105N. Un deuxième aimant positif 105P est positionné en alternance avec un deuxième aimant négatif 105N. Le composant magnétique 120 comprend donc deux deuxièmes aimants positifs 105P et deux deuxièmes aimants négatifs 105N. Les deuxièmes aimants 105P, 105N peuvent être positionnés successivement autour de l'axe Δ du corps 102 à des positions séparées d'un angle de 90°, chaque deuxième aimant 105P, 105N étant à une position intermédiaire entre deux premiers aimants successifs 104P, 104N.

En particulier, les deuxièmes aimants 105P, 105N peuvent être séparés des premiers aimants 104P, 104N par un angle radial. Autrement dit, les deuxièmes aimants 105P, 105N peuvent ne pas toucher les premiers aimants 104P, 104N. En effet, il n'est pas nécessaire que le composant magnétique 120 comprenne une zone magnétique continue autour de l'axe Δ. En localisant les zones magnétiques à des positions radiales autour de l'axe Δ, on obtient une détection efficace par le capteur à effet hall tout en limitant le poids de matériau magnétique utilisé dans le composant magnétique 120.

A une distance entre le composant magnétique 120 et le capteur à effet hall 107 donnée, les premiers aimants 104P, 104N peuvent être déterminés pour permettre une détection de position par le capteur à effet hall. Ensuite, les deuxièmes aimants 105P, 105N peuvent être déterminés tels que le rapport entre la dimension des deuxièmes aimants 105P, 105N suivant l'axe Δ du corps 102 et la dimension des premiers aimants 104P, 104N suivant l'axe Δ du corps 102 est supérieure ou égal à 1/3 et inférieur ou égal à 2. Le rapport entre la dimension des deuxièmes aimants 105P, 105N suivant une direction transverse à l'axe Δ du corps 102, et la dimension des premiers aimants 104P, 104N suivant cette direction peut être supérieure ou égal à 0,2 et inférieur ou égal à 0,5. En particulier, la direction transverse correspond à une direction perpendiculaire par rapport à l'axe Δ du corps 102. Ainsi, on s'assure que la pente de la courbe 210 entre les seuils S1, S2 est notamment comprise entre 4 et 7 mT/°ou entre -7 et -4 mT/°, ce qui peut permettre d'obtenir une précision dans la détection de la position angulaire du composant magnétique 120 inférieure à 0,5 voire à 0,2°.

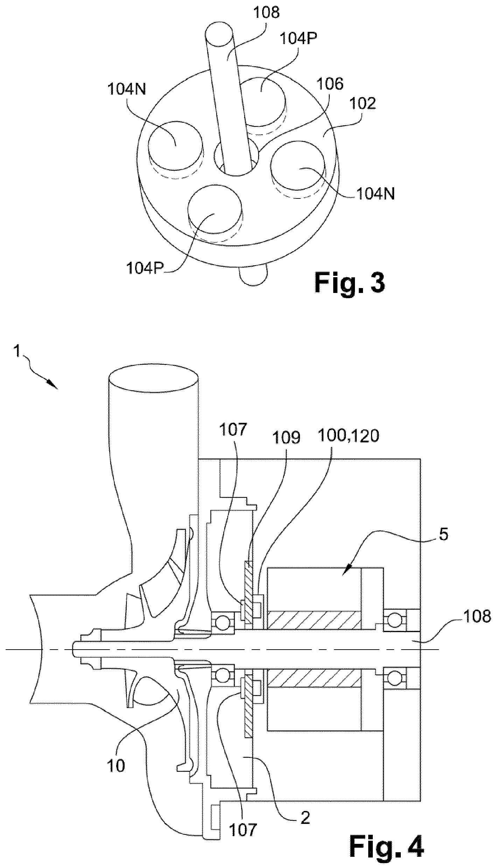

Les figures 3 et 5 illustrent des exemples dans lesquels les composants magnétiques 100, 120 sont montés sur un arbre tournant 108 de manière à permettre une détection d'une rotation de l'arbre 108 par le capteur à effet hall 107. Notamment, l'axe Δ du corps 102 vient s'aligner avec l'axe de l'arbre tournant 108. En particulier, l'arbre tournant 108 traverse l'ouverture centrale 106. Cependant l'ouverture centrale 106 pourrait être non traversante. Une extrémité de l'arbre tournant 108 pourrait alors être reçue dans l'ouverture centrale 106.

Notamment, l'arbre tournant 108 est un arbre de rotation d'une machine électrique tournante 5 représentée par exemple en figure 4. Le composant magnétique 100, 120 peut être monté à une première position axiale le long de l'axe de rotation de la machine 5 et le capteur à effet hall 107 peut être monté à une deuxième position axiale le long de l'axe de rotation, qui est différente de la première position axiale. En particulier, le capteur à effet hall 107 vient en vis-à-vis d'au moins une portion du composant magnétique 100, 120 pour une détection de rotation de l'arbre tournant 108. Ainsi, la détection du composant magnétique 100, 120 par le capteur à effet hall 107 se fait axialement.

Le capteur à effet hall 107 peut être monté sur une carte électronique 109 qui s'étend suivant un plan perpendiculaire à l'axe de l'arbre tournant 108, en particulier à l'axe de l'arbre de rotation de la machine 5. En particulier, la carte électronique 109 est montée à la deuxième position radiale décrite précédemment.

Le composant magnétique 100, 120 peut être associé à trois capteurs à effet hall 107 pour améliorer la précision de détection du composant magnétique 100, 120. Ces capteurs à effet hall 107 sont notamment répartis en vis-à-vis du composant magnétique 100, 120 autour de l'axe de l'arbre tournant 108, en particulier de l'axe de l'arbre de rotation de la machine 5. Les capteurs à effet hall 107 sont par exemple disposés de sorte qu'un premier capteur à effet hall est séparé de 90° avec les deux autres capteurs à effet hall.

Pour diminuer les perturbations sur la détection du composant magnétique 100, 120 par le capteur à effet hall 107, un blindage peut séparer une zone dans laquelle se trouve la machine 5, en particulier le stator de la machine 5, d'une autre zone dans laquelle se trouve le composant magnétique 100, 120 et le ou les capteurs à effet hall 107.

Les deuxièmes aimants 105P, 105N peuvent avoir une forme similaire à celle des premiers aimants 104P, 104N. Ainsi, les deuxièmes aimants 105P, 105N peuvent être en forme de palet. Plus précisément, les aimants 105P, 105N peuvent avoir une forme cylindrique ou prismatique. En particulier, ces formes sont sensiblement équivalentes pourvu qu'on s'assure que le volume d'aimant et la surface d'aimant en vis-à-vis du capteur à effet hall 107 restent les mêmes.

Notamment, les premiers aimants 104P, 104N ont une induction rémanente comprise entre 0,2 et 0,6 T, voire entre 0,3 et 0,4 T ; et les deuxièmes aimants 105P, 105N ont une induction rémanente comprise entre 0,6 et 1,2 T, voire entre 0,7 et 1 T. Les deuxièmes aimants 105P, 105N comprennent par exemple des terres rares pour atteindre les valeurs d'inductance rémanente. En particulier, ces valeurs d'inductance rémanente, sont adaptées à une configuration dans laquelle la distance entre le composant magnétique 100, 120 et le capteur à effet hall 107 est comprise entre 2,1 et 3,3 mm. Les premiers aimants 104P, 104N peuvent avoir une forme cylindrique avec une hauteur de 4,83 mm environ et un rayon de 8 mm. Les deuxièmes aimants 105P, 105N peuvent avoir une forme cylindrique avec une hauteur de 4,6 mm et un rayon de 2 mm.

La figure 4 illustre un exemple de compresseur de suralimentation électrique 1 qui comprend le composant magnétique 100 illustré en figure 3, ou le composant magnétique 120 illustré en figure 5. Notamment, le compresseur de suralimentation 1 est configuré pour être embarqué dans un véhicule pour comprimer les gaz d'admission du moteur à combustion du véhicule. Le compresseur de suralimentation 1 comprend une roue de compression 10, notamment destinée à comprimer l'air d'admission d'un moteur à combustion en association duquel le compresseur de suralimentation 1 est monté. La roue de compression 10 est entrainée en rotation par la machine électrique 5 par l'intermédiaire de l'arbre tournant 108. Le compresseur de suralimentation 1 comporte également une électronique 2 qui comprend le capteur à effet hall 107. Notamment, l'électronique 2 comprend un convertisseur de tension qui alimente la machine électrique 5 à partir d'un réseau électrique. En particulier, le réseau électrique est un réseau électrique du véhicule et comprend une batterie alimentant ledit réseau.

L'électronique 2 est notamment placée entre la machine électrique 5 et la roue de compression 10. En particulier, l'électronique 2 est à une position axiale située entre la roue de compression 10 et la machine électrique 5. Alternativement, l'électronique 2 pourrait être placée à une extrémité axiale du compresseur de suralimentation électrique 1. Notamment, l'électronique 2 pourrait être placée à l'extrémité axiale derrière la machine électrique 5, de sorte que la machine électrique 5 se trouve entre l'électronique 2 et la roue de compression 10.

L'invention n'est pas limitée aux exemples décrits, mais est seulement définie par les revendications. En particulier, le composant magnétique 100, 120 pourrait être utilisé dans un appareil autre qu'un compresseur de suralimentation électrique, par exemple dans un alterno-démarreur ou autre.

## Revendications

1. Composant magnétique (120) configuré pour être monté en relation avec une pièce tournante (108) de manière à permettre une détection de la rotation de ladite pièce (108) par un capteur à effet hall (107), ledit composant magnétique (120) comprenant :
- un corps (102) amagnétique ayant un axe (Δ) destiné à s'aligner avec l'axe de rotation de la pièce,
- quatre premiers aimants (104P, 104N) logés dans ledit corps (102) et formant une alternance d'aimants positif (104P) et négatif (104N), lesdits aimants (104P, 104N) étant des éléments indépendants maintenus ensemble par ledit corps (102) et positionnés successivement à des angles de 90° autour de l'axe (Δ) du corps (102),
- quatre deuxièmes aimants (105P, 105N) logés dans ledit corps (102) et positionnés dans un intervalle angulaire respectif entre deux premiers aimants successifs,
le rapport entre l'induction rémanente d'un premier aimant (104P, 104N) et l'induction rémanente d'un deuxième aimant (105P, 105N) étant comprise entre 0,3 et 0,5.

2. Composant magnétique (120) selon la revendication 1, dans lequel le rapport entre la dimension des deuxièmes aimants (105P, 105N) suivant l'axe (Δ) du corps (102) et la dimension des premiers aimants (104P, 104N) suivant l'axe (Δ) du corps (102) est supérieure ou égale à 1/3 et inférieur ou égal à 2.

3. Composant magnétique (120) selon la revendication 1 ou 2, dans lequel le rapport entre la dimension des deuxièmes aimants (105P, 105N) suivant une direction, transverse à l'axe (Δ) du corps (102), et la dimension des premiers aimants (104P, 104N) suivant cette direction est supérieur ou égal à 0,2 et inférieur ou égal à 0,5.

4. Composant magnétique (120) selon l'une des revendications précédentes, dans lequel les premiers aimants (104P, 104N) ont une induction rémanente comprise entre 0,2 et 0,6 T ; et les deuxièmes aimants (105P, 105N) ont une induction rémanente comprise entre 0,6 et 1,2 T.

5. Composant magnétique (120) selon l'une des revendications précédentes, dans lequel le composant magnétique (120) comprend seulement quatre premiers aimants (104P, 104N) et quatre deuxièmes aimants (105P, 105N) de manière à permettre une détection de la rotation de ladite pièce (108) par un capteur à effet hall (107).

6. Composant magnétique (120) selon l'une des revendications précédentes, dans lequel les aimants (104P, 104N, 105P, 105N) sont séparés entre eux par un angle radial.

7. Composant magnétique (120) selon l'une des revendications précédentes, configuré pour être monté sur un arbre tournant (108) de manière à permettre une détection d'une rotation de l'arbre (108) par un capteur à effet hall (107).

8. Composant magnétique (120) selon la revendication précédente, dans lequel le corps (102) a une ouverture centrale (106) autour de son axe (Δ), l'ouverture centrale (106) étant configurée pour recevoir l'arbre tournant (108).

9. Ensemble électrique comprenant :
- une machine électrique tournante (5) ayant un arbre de rotation (108) ;
- au moins un composant magnétique (120) selon l'une des revendications précédentes monté sur l'arbre de rotation (108) ;
- au moins un capteur à effet hall (107) configuré pour détecter une rotation de l'arbre de rotation (108) à partir d'un champ magnétique émis par le composant magnétique (120).

10. Ensemble selon la revendication précédente, dans lequel le composant magnétique (120) est monté à une première position axiale le long de l'axe de rotation (Δ) de la machine (5) et le capteur à effet hall (107) est monté à une deuxième position axiale le long de l'axe de rotation (Δ) différente de la première position axiale, de sorte à venir en vis-à-vis d'au moins une portion du composant magnétique (120) pour une détection de rotation de l'arbre de rotation (108).

11. Ensemble selon la revendication 9 ou 10, dans lequel la distance entre le composant magnétique (120) et le capteur à effet hall (107) est comprise entre 2,1 et 3,3 mm.

12. Compresseur de suralimentation électrique (1), notamment pour véhicule automobile, comprenant :
- un ensemble électrique selon l'unes des revendications 9 à 11 ;
- une roue de compression de gaz (10) configurée pour être entrainée par la machine électrique (5) de l'ensemble électrique ;
- une électronique (2) comprenant ledit capteur à effet hall (107).

## Patentansprüche

1. Magnetkomponente (120), die eingerichtet ist, um in Verbindung mit einem drehenden Teil (108) montiert zu sei, um eine Erfassung der Drehung des Teils (108) durch einen Hall-Effekt-Sensor (107) zu ermöglichen, wobei die Magnetkomponente (120) umfasst:
- einen amagnetischen Körper (102) mit einer Achse (Δ), die dazu bestimmt ist, sich mit der Drehachse des Teils auszurichten,
- vier erste Magneten (104P, 104N), die im Körper (102) angeordnet sind und eine Wechselfolge von positiven Magneten (104P) und negativen Magneten (104N) bilden, wobei die Magneten (104P, 104N) unabhängige Elemente sind, die vom Körper (102) zusammengehalten werden und nacheinander in Winkeln von 90° um die Achse (Δ) des Körpers (102) positioniert sind,
- vier zweite Magneten (105P, 105N), die im Körper (102) angeordnet und in einem jeweiligen Winkelabstand zwischen zwei aufeinanderfolgenden ersten Magneten positioniert sind,
wobei das Verhältnis zwischen der remanenten Induktion eines ersten Magneten (104P, 104N) und der remanenten Induktion eines zweiten Magneten (105P, 105N) zwischen 0,3 und 0,5 liegt.

2. Magnetkomponente (120) nach Anspruch 1, bei der das Verhältnis zwischen der Dimension der zweiten Magneten (105P, 105N) entlang der Achse (Δ) des Körpers (102) und der Dimension der ersten Magneten (104P, 104N) entlang der Achse (Δ) des Körpers (102) größer oder gleich 1/3 und kleiner oder gleich 2 ist.

3. Magnetkomponente (120) nach Anspruch 1 oder 2, bei der das Verhältnis zwischen der Dimension der zweiten Magneten (105P, 105N) entlang einer Richtung quer zur Achse (Δ) des Körpers (102) und der Dimension der ersten Magneten (104P, 104N) entlang dieser Richtung größer oder gleich 0,2 und kleiner oder gleich 0,5 ist.

4. Magnetkomponente (120) nach einem der vorhergehenden Ansprüche, bei der die ersten Magneten (104P, 104N) eine remanente Induktion zwischen 0,2 und 0,6 T haben; und die zweiten Magneten (105P, 105N) eine remanente Induktion zwischen 0,6 und 1,2T haben.

5. Magnetkomponente (120) nach einem der vorhergehenden Ansprüche, wobei die Magnetkomponente (120) nur vier erste Magneten (104P, 104N) und vier zweite Magneten (105P, 105N) umfasst, um eine Erfassung der Drehung des Teils (108) durch einen Hall-Effekt-Sensor (107) zu ermöglichen.

6. Magnetkomponente (120) nach einem der vorhergehenden Ansprüche, bei der die Magneten (104P, 104N, 105P, 105N) untereinander durch einen Radialwinkel getrennt sind.

7. Magnetkomponente (120) nach einem der vorhergehenden Ansprüche, die eingerichtet ist, um auf einer drehenden Welle (108) montiert zu sein, um eine Erfassung einer Drehung der Welle (108) durch einen Hall-Effekt-Sensor (107) zu ermöglichen.

8. Magnetkomponente (120) nach dem vorhergehenden Anspruch, bei der der Körper (102) eine zentrale Öffnung (106) um seine Achse (Δ) hat, wobei die zentrale Öffnung (106) eingerichtet ist, um die drehende Welle (108) aufzunehmen.

9. Elektrische Einheit, umfassend:
- eine drehende elektrische Maschine (5), die eine Rotationswelle (108) aufweist;
- mindestens eine Magnetkomponente (120) nach einem der vorhergehenden Ansprüche, die auf der drehenden Welle (108) montiert ist;
- mindestens einen Hall-Effekt-Sensor (107), der eingerichtet ist, um eine Drehung der drehenden Welle (108) von einem von der Magnetkomponente (120) entsandten Magnetfeld aus zu erfassen.

10. Einheit nach dem vorhergehenden Anspruch, bei der die Magnetkomponente (120) an einer ersten Axialposition entlang der Drehachse (Δ) der Maschine (5) montiert ist, und der Hall-Effekt-Sensor (107) an einer zweiten Axialposition entlang der Drehachse (Δ), die sich von der ersten Axialposition unterscheidet, montiert ist, so dass er zumindest gegenüber einen Abschnitt der Magnetkomponente (120) zur Drehungserfassung der drehenden Welle (108) gelangt.

11. Einheit nach Anspruch 9 oder 10, bei der der Abstand zwischen der Magnetkomponente (120) und dem Hall-Effekt-Sensor (107) zwischen 2,1 und 3,3 mm beträgt.

12. Elektrischer Aufladekompressor (1), insbesondere für ein Kraftfahrzeug, umfassend:
- eine elektrische Einheit nach einem der Ansprüche 9 bis 11;
- ein Gaskompressionsrad (10), das eingerichtet ist, um von der elektrischen Maschine (5) der elektrischen Einheit angetrieben zu werden;
- eine Elektronik (2), umfassend den Hall-Effekt-Sensor (107).

## Claims

1. Magnetic component (120) configured to be mounted in relation to a rotary part (108) so as to enable detection of the rotation of said part (108) by a Hall effect sensor (107), said magnetic component (120) comprising:
- a non-magnetic body (102) having an axis (Δ) intended to align with the axis of rotation of the part,
- four first magnets (104P, 104N) housed in said body (102) and forming an alternation of positive (104P) and negative (104N) magnets, said magnets (104P, 104N) being independent elements held together by said body (102) and positioned successively at angles of 90° about the axis (Δ) of the body (102),
- four second magnets (105P, 105N) housed in said body (102) and positioned in a respective angular interval between two successive first magnets,
the ratio between the remanent induction of a first magnet (104P, 104N) and the remanent induction of a second magnet (105P, 105N) being between 0.3 and 0.5.

2. Magnetic component (120) according to Claim 1, wherein the ratio between the dimension of the second magnets (105P, 105N) along the axis (Δ) of the body (102) and the dimension of the first magnets (104P, 104N) along the axis (Δ) of the body (102) is greater than or equal to 1/3 and less than or equal to 2.

3. Magnetic component (120) according to Claim 1 or 2, wherein the ratio between the dimension of the second magnets (105P, 105N) along one direction, transverse to the axis (Δ) of the body (102), and the dimension of the first magnets (104P, 104N) along this direction is greater than or equal to 0.2 and less than or equal to 0.5.

4. Magnetic component (120) according to one of the preceding claims, wherein the first magnets (104P, 104N) have a remanent induction of between 0.2 and 0.6 T; and the second magnets (105P, 105N) have a remanent induction of between 0.6 and 1.2 T.

5. Magnetic component (120) according to one of the preceding claims, wherein the magnetic component (120) comprises only four first magnets (104P, 104N) and four second magnets (105P, 105N) so as to enable detection of the rotation of said part (108) by a Hall effect sensor (107).

6. Magnetic component (120) according to one of the preceding claims, wherein the magnets (104P, 104N, 105P, 105N) are separated from one another by a radial angle.

7. Magnetic component (120) according to one of the preceding claims, configured to be mounted on a rotary shaft (108) so as to enable detection of a rotation of the shaft (108) by a Hall effect sensor (107).

8. Magnetic component (120) according to the preceding claim, wherein the body (102) has a central aperture (106) about its axis (Δ), the central aperture (106) being configured to receive the rotary shaft (108).

9. Electrical assembly comprising:
- a rotary electric machine (5) having a rotating shaft (108);
- at least one magnetic component (120) according to one of the preceding claims mounted on the rotating shaft (108);
- at least one Hall effect sensor (107) configured to detect a rotation of the rotating shaft (108) on the basis of a magnetic field emitted by the magnetic component (120).

10. Assembly according to the preceding claim, wherein the magnetic component (120) is mounted at a first axial position along the axis of rotation (Δ) of the machine (5) and the Hall effect sensor (107) is mounted at a second axial position along the axis of rotation (Δ) that is different from the first axial position, so as to face at least one portion of the magnetic component (120) in order to detect rotation of the rotating shaft (108).

11. Assembly according to Claim 9 or 10, wherein the distance between the magnetic component (120) and the Hall effect sensor (107) is between 2.1 and 3.3 mm.

12. Electric supercharger (1), in particular for a motor vehicle, comprising:
- an electrical assembly according to one of Claims 9 to 11;
- a gas compression wheel (10) configured to be driven by the electric machine (5) of the electrical assembly;
- an electronic system (2) comprising said Hall effect sensor (107).
